# EUROPÄISCHE PATENTANMELDUNG

(11) **EP 1 531 264 A1**
(43) Veröffentlichungstag der Anmeldung: **18.05.2005**
(21) Anmeldenummer: 04078071.0
(22) Anmeldetag: 09.11.2004
(51) Int. Cl.: F03G 7/05

(54) **Ozean Warmenergie Konversionsanlage**

(30) Priorität: 11.11.2003 IT BZ20030056
(71) Anmelder: Franch, Gino, 39100 Bolzano (IT)
(72) Erfinder: Franch, Gino, 39100 Bolzano (IT)
(74) Vertreter: Faraggiana, Vittorio, Dr. Ing.

(57) **Zusammenfassung**

Die Erfindung, so wie in der Figur beschrieben, besteht aus einer Turbine TU, aus einer Pumpe PU und aus einer hydraulischen Schaltung, die von vier Rohren AB, BC, CD, DA gebildet wird, die miteinander verbunden und mit Wasser gefüllt sind. Der Abschnitt AB liegt horizontal und ist im Bereich der oberen Meeresschicht oder eines Flüssigkeitsbehälters eingetaucht, wo die absolute Temperatur der Flüssigkeit T₂K ist. Der darüber liegende Abschnitt CD ist in der Tiefe im Bereich einer Temperatur T₁<T₂ angeordnet. Die Rohrleitungen besitzen eine Länge, eine geometrische Form und eine Innenverkleidung, die imstande sind die Temperatur der Innenflüssigkeit auf jener der umgebenen Außenflüssigkeit fast identisch ist. Die in den Rohrabschnitten AB und CD enthaltene Flüssigkeit besitzt jeweils die Temperatur T₂ und T₁, während die Flüssigkeit des Rohrabschnittes AD als auch jene des Rohrabschnittes BC eine Temperatur besitzen, die identisch jener der umgebenen Außenflüssigkeit ist, und von T₂ auf T₁ abnimmt. Die vier Seiten der oben angegebenen Schaltung sind daher derart angeordnet, dass ein Carnotscher Kreisprozess gebildet wird, der Teil der thermischen Energie der in ihm enthaltenen Flüssigkeit mit der größtmöglichsten Wirkungsgrade umwandelt.

In der Nähe der Stelle B der Figur ist eine Turbine TU eingefügt, die ihrer Drehwelle die von der Flüssigkeit erzeugte Energie überträgt; und in der Nähe der Stelle A ist eine Pumpe eingefügt, die den Bewegungsanlauf der Flüssigkeit verursacht.

## Beschreibung

Die vorliegende Erfindung bezieht sich auf eine mechanische Energie erzeugende Anlage unter Benutzung der Temperaturdifferenz des Wassers von zwei an verschiedenen geodätischen Höhen liegenden Meeresschichten gemäß dem Oberbegriff des Anspruchs 1.

Die Lösung des Problems, über eine große Energiemenge zu verfügen, ist für die heutige Zivilisation grundlegend und gleichfalls grundlegend ist, dass die von dieser Energie herrührende Verschmutzung innerhalb tragbarer Grenzen gehalten wird.

Bis jetzt beruhen die verwendeten Hauptenergiequellen auf die Verwendung von: 1) Wasserfällen; 2) festen, flüssigen oder gasförmigen Brennstoffen; 3) Atomenergie. Es ist anzumerken, dass die Quellen unter 2) und 3) sehr verschmutzend sind.

Die Aufgabe der vorliegenden Erfindung ist die Herbeiführung der Lösung dieses Problems, indem eine Anlage vorgeschlagen wird, welche die Temperaturdifferenz zwischen geodätischen Niveaus des Meeres ausnutzt.

Diese Aufgabe wird durch eine mechanische Energie erzeugende Anlage unter Benutzung der Temperaturdifferenz des Wassers von zwei an verschiedenen geodätischen Höhen liegenden Meeresschichten mit den Merkmalen des Anspruchs 1 gelöst.

Die vorgeschlagene Anlage ist in der Lage, hohe Energiemengen ohne Verschmutzung erzeugen.

Nach Wissens des Anmelders hat bis jetzt niemand das Augenmerk auf die Möglichkeit gerichtet, die unerschöpfliche thermische Energiemenge auszubeuten, die in den Weltmeeren gesammelt ist. Diese Energie kann in mechanische Energie umgewandelt werden, indem die Tatsache genutzt wird, dass die Temperatur des Meereswassers an der Oberfläche am höchsten ist, wo sie einen Betrag zwischen 20° und 30° C besitzt, indem sie mit der Tiefe bis Werte von etwa 10° C abnimmt. Wird diese Differenz unter Verwendung eines thermodynamischen Kreislaufes ausgebeutet, kann man ohne Verschmutzung zu erzeugen einen wichtigen Anteil der thermischen Energie der Flüssigkeit in mechanische Energie umwandeln. Es ist überdies die Tatsache vernachlässigbar, ob die Wirkleistung der Umwandlung klein ist. Dies hat nämlich nur Auswirkungen auf die Bemessung der zu verwendenden Anlagen und betrifft nicht die Kosten des verwendeten Brennstoffs, der nicht vorliegt.

Es ist überdies vor Augen zu halten, dass das thermische Energielager, so wie oben angegeben, unaufhörlich durch die Sonnenstrahlung gespeist wird.

Die Leistung und der Wirkungsgrad der vorliegenden Anlagen kann überdies steigen, indem die oben erwähnte Temperaturdifferenz wie beschrieben erhöht wird.

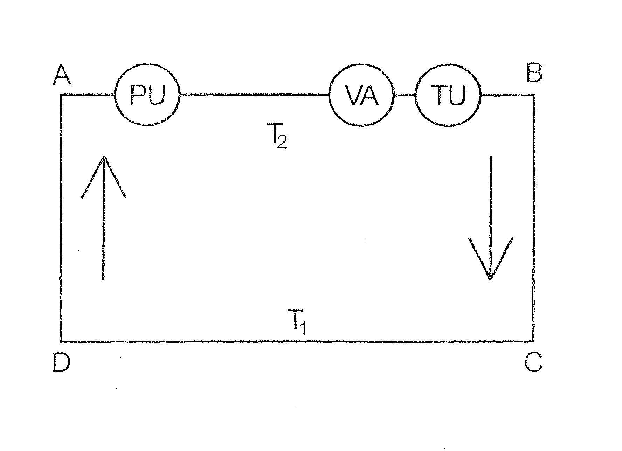

### BESCHREIBUNG DER FIGUR

Die Figur stellt eine Reihe von vier Rohrabschnitten AB, BC, CD und DA dar, die eine Turbine TU und eine Pumpe PU umfasst; das Gesamte ist derart angeordnet, dass das Viereck von miteinander verbundener Rohre mit den Ecken A,B,C,D gebildet wird. Der Abschnitt AB ist horizontal im Bereich der oberen Meeresschicht oder eines großen Beckens eingetaucht, wo die absolute Temperatur der Flüssigkeit T₂ = 273 + t₂ °C ist. Der gegenüberliegende Abschnitt CD gleicher Länge liegt hingegen in der Tiefe im Bereich einer Temperatur T₁ = 273 + t₁ °C < T₂. Die Abschnitte AD und BC verbinden die Enden der beiden Abschnitte AB und CD, wobei sie eine Wasserschicht durchqueren, in der die Temperatur der Flüssigkeit von T₂ auf T₁ geändert wird. Die Abschnitte sind im Bereich der Ecken verbunden und ohne die Füllungs- oder Entleerungsöffnungen; ihre Wandungen besitzen überdies eine hohe Wärmeleitfähigkeit, derart, dass die Temperatur der erhaltenen Flüssigkeit identisch jener der umliegenden Außenflüssigkeit ist.

In der durch die Figur dargestellte Reihe ist sowohl der Eingang als auch der Ausgang von zwei grundliegenden Organen für die Betriebsweise der Anlage zwischengeschaltet: Die Turbine TU und die Pumpe PU. Die durch einen Motor angetriebene Pumpe PU beginnt, die Flüssigkeit zum Umlauf zu bringen, die auf kontinuierliche Weise die vier reversiblen Prozesse des Carnotischen Kreisprozesses ausführt. Gleichzeitig entnimmt die Turbine die durch den Kreisprozess erzeugte Flüssigkeitsenergie und überträgt sie dem Benutzer, während das Ventil VA (siehe Figur) es erlaubt, den Betrieb der Anlage zu unterbrechen und wieder aufzunehmen.

### BESCHREIBUNG DER BETRIEBSWEISE DER ANLAGE

Die Rohrabschnitte der Schaltung, so wie in der Figur dargestellt, müssen eine ausreichende Wärmeleitfähigkeit besitzen, um an jeder Stelle die Gleichheit der Temperatur der Außenflüssigkeit mit der Temperatur der anliegenden, im Rohr enthaltenen Flüssigkeit herzustellen. Die verlangte Wärmeleitfähigkeit wird mit einer annehmbaren Spanne hergestellt, indem einige der folgenden Vorkehrungen getroffen werden: a) Verwendung eines Rohrs mit rechteckigem Querschnitt, bestehend aus einer großen Basis und einer kleinen Höhe; b) die Verwendung von einer Rippung, außerhalb und innerhalb des Rohres; c) die Verwendung einer angemessenen Länge eines jeden Schaltungsabschnittes; d) Begrenzung der Flüssigkeitsgeschwindigkeit in den Rohrleitungen; e) Austausch eines jeden Abschnittes mit einem parallelen Abschnitt mit mehreren Rohren.

Die Schaltung aus der Figur für die Flüssigkeitsbewegung mit Rechtsrichtung, die durch die Pumpe PU festgelegt wird, entwickelt gleichzeitig in den vier Abschnitten AB, BC, CD, DA die nachstehend beschriebenen reversiblen Kreisläufe, die identisch mit jenen sind, die durch einen Carnotschen Kreislauf erzeugt werden.

Nämlich: - die durch die Pumpe AB geförderte Flüssigkeit des Abschnittes AB unterliegt einem isothermischen Unterdruck mit einer Temperatur T₂, die in der Flüssigkeit des Rohrabschnittes AB die Erzeugung der mechanischen Energie W_{AB} und die Übertragung der Wärme Q_{AB} von der Außenflüssigkeit an die Innenflüssigkeit verursacht; die Energie W_{AB} und die Wärme Q_{AB} erfüllen die Beziehungen: W_{AB} = Q_{AB} = T₂S₂, wo S₂ die Entropie der Flüssigkeit ist; - die Flüssigkeit des Abschnittes BC unterliegt aufgrund der Anwesenheit einer Außenflüssigkeit mit veränderlicher Temperatur von T₂ auf T₁ einem isoentropischen Unterdruck, der eine gleiche Arbeit entwickelt und gleich entgegengesetzt jenen des Abschnittes DA ist, der einer isoentropischen Zusammendrückung mit einer Temperatur, veränderlich von T₁ auf T₂ unterliegt; - die Flüssigkeit des Abschnittes CD unterliegt einer isothermischen Pressung mit einer Temperatur T₁, bei der die Energie W_{CD} entwickelt wird und der Außenflüssigkeit mit der Wärme Q_{CD} übertragen wird, wobei die Beziehungen W_{CD} = Q_{CD} = -T₁S₁ eingehalten werden. Was die obigen Ausführungen betrifft, entwickelt die Schaltung der Figur kontinuierlich die Energie W₀ = W_{AB} + W_{CD} = Q_{AB} + Q_{CD} = T₂S₂-T₁S₁.

Die Energie kann viel höhere Beträge mit der Zunahme der Temperatur der Flüssigkeit im Abschnitt AB erreichen. Dies kann verwirklicht werden, indem die Abschnitte BC und DA verlängert werden und der Abschnitt AB aus dem Wasser herausgezogen wird. Nach diesem kann die Temperatur T₂ der in AB enthaltenen Flüssigkeit mit einer bemerkenswerter Zunahme des Wirkungsgrades und der Leistung der Anlage erhöht werden. Die in der Flüssigkeit der Schaltung ABCD entwickelte Energie W₀ wird durch die Turbine TU aufgenommen und von dieser über deren Welle dem Benutzer übertragen.

### VORTEILE

Die Anlage weist die nachfolgenden Vorteile auf:
1) Die Erzeugung einer verhältnismäßig großen Energie auch für eine kleine Temperaturdifferenz (beispielsweise für eine Temperatur T₂ = 30° und T₁ = 10° erhält man: W₀ = 374,703 KJ/Kg;
2) die kostenlose und dauerhafte Verfügbarkeit einer unerschöpflichen Wärmeenergiequelle;
3) die Betriebsweise der Anlage mit kompletter Abwesenheit von Verschmutzung;
4) der thermodynamische Betriebskreislauf mit einem höchstmöglichen Wirkungsgrad;
5) die Abwesenheit von Füllung/Entleerung von Flüssigkeiten, da die Anlage immer dieselbe Flüssigkeit verwendet;
6) eine Anlage zur Erzeugung von Energie mit großer Einfachheit und begrenzter Wartung.

## Patentansprüche

1. Mechanische Energie erzeugende Anlage unter Benutzung der Temperaturdifferenz des Wassers von zwei an verschiedenen geodätischen Höhen liegenden Meeresschichten, **dadurch gekennzeichnet, dass** sie eine hydraulische Schaltung umfasst , bestehend aus vier Rohrabschnitten AB, BC, CD, DA, gefüllt mit Flüssigkeit und derart in Reihe geschaltet, dass ein Rohrviereck gebildet wird, unter Ausbildung eines Carnotischen Kreisprozesses, bei dem der Abschnitt AB unmittelbar unterhalb der Oberfläche des Meeres mit Temperatur T₂ liegt, während der gegenüberliegende Abschnitt CD mit großer Tiefe mit einer niedrigeren Temperatur T₁ eingetaucht ist, wobei auf diese Art und Weise die sich in Bewegung befindliche Flüssigkeit einer Resultierenden ausgesetzt ist, welche die mechanische Energie der Flüssigkeit selbst überträgt.

2. Anlage nach Anspruch 1, **dadurch gekennzeichnet, dass** zur hydraulischen Schaltung, eine Pumpe in einer Umgebung der Stelle A des Abschnittes AB in Reihe geschalten wird, um den Umlauf der Flüssigkeit zum Anlaufen zu bringen.

3. Anlage nach Anspruch 1, **dadurch gekennzeichnet, dass** eine Turbine in der Umgebung der Stelle B des Abschnittes AB in Reihe geschalten wird, um die Energie der Flüssigkeit einem Außenbenutzer zu übertragen.

4. Anlage nach den vorstehenden Ansprüchen, **dadurch gekennzeichnet, dass** im Abschnitt AB, ein Ventil VA in Reihe geschalten wird, um die Unterbrechung und die Wiederaufnahme der Betriebsweise der Anlage zu erlauben.

5. Anlage nach den vorstehenden Ansprüchen, **dadurch gekennzeichnet, dass** Verlängerung die Seitenabschnitte CB und DA, derart verlängert werden, der Abschnitt AB außerhalb des Wassers gebracht wird und somit eine Erhitzung mit der Erhöhung der Temperatur der Flüssigkeit in demselben zur Erhöhung des Wirkungsgrades und der Leistung der Anlage wird.

6. Anlage nach den vorstehenden Ansprüchen, **dadurch gekennzeichnet, dass** die Pumpe und/oder die Turbine aus einem System von Rohrschlangen besteht, die periodisch Rotorträgheitskräfte übertragen.
